# EUROPEAN PATENT APPLICATION

(11) **EP 4 379 353 A1**
(43) Date of publication of application: **05.06.2024**
(21) Application number: 23211936.2
(22) Date of filing: 24.11.2023
(51) Int. Cl.: G01N 21/3563, G01N 21/552, G01N 21/35

(54) **SPECTRUM ANALYSIS SYSTEM AND SPECTRUM ANALYSIS METHOD**

(30) Priority: 29.11.2022 JP 2022190772
(71) Applicant: Shimadzu Corporation, Nakagyo-ku, Kyoto-shi, Kyoto 604-8511 (JP)
(72) Inventor: FUJI, Risa, Kyoto-shi, Kyoto, 604-8511 (JP); MURAKAMI, Sachio, Kyoto-shi, Kyoto, 604-8511 (JP); IWASAKI, Shoko, Kyoto-shi, Kyoto, 604-8511 (JP)
(74) Representative: Müller-Boré & Partner Patentanwälte PartG mbB

(57) **Abstract**

This spectrum analysis system (100) has a measurer (20), a display (40), and a controller (31) that displays plurality of first anomaly items (61a, 61b, 61c, 61d, 61e, 61f, 61g) that indicate the type of anomaly in the display of the measurement spectrum waveform (41). The controller displays the first reference spectrum waveform (62) to refer to the display mode of the anomaly corresponding to each of the plurality of first anomaly items in the display.

## Description

### BACKGROUND OF THE INVENTION

### Field of the Invention

The present invention relates to a spectrum analysis system and a spectrum analysis method, and in particular to a spectrum analysis system and a spectrum analysis method for displaying a measurement spectrum wave pattern based on a measurement result.

### Description of the Background Art

Conventionally, analysis apparatuses for displaying a spectrum are known. Such an apparatus is disclosed in Japanese Patent Publication No. JP 5385865, for example.

The analysis apparatus disclosed in the above Japanese Patent Publication No. JP 5385865 acquires a spectrum as a curve of measurement by using Raman spectroscopy. The analysis apparatus is configured to analyze a shape of the curve of measurement so as to determine whether the measurement is optimally performed, and whether the curve of measurement is properly represented. In the analysis apparatus disclosed in the above Japanese Patent Publication No. JP 5385865, if it is determined that the measurement or the representation is anomalous, a displaying means displays help information that provides solutions for obstruction events, which cause such anomalous measurement or representation. In a case in which two or more candidates for the obstruction events are found, two or more pieces of help information corresponding to the two or more candidates are displayed. In the above Japanese Patent Publication No. JP 5385865, examples of the obstruction events are provided by fluorescence and spectral saturation.

Users who are inexperienced in analysis of the measurement spectrum waveforms (measurement curve), which is a spectrum based on a measurement result, may not easily find which type of anomalous event occurs in representation of the measurement spectrum waveform. Even in a case in which help information that provides solutions for obstruction events, which cause an anomaly in representation of a measurement spectrum waveform, is displayed as in the analysis apparatus disclosed in the above Japanese Patent Publication No. JP 5385865, such an inexperienced user cannot easily specifically find which type of representation form (shape of a measurement spectrum waveform) is determined as an anomaly. For example, if fluorescence and spectral saturation are detected as obstruction events, the inexperienced user cannot determine which types of anomaly caused by fluorescence and spectral saturation appear in the representation form. Also, even if the inexperienced user feels that something is wrong in the displayed spectrum waveform, he or she cannot specifically determine which part of the spectrum waveform is anomalous. As discussed above, because inexperienced users cannot easily determine which part of the spectrum waveform they have to pay attention to detect which type of anomaly appears, it is difficult for them to determine how to solve obstruction events. Consequently, it is desired to easily determine which type of anomaly appears even for users who are inexperienced in analysis of measurement spectrum waveforms.

### SUMMARY OF THE INVENTION

The present invention is intended to solve the above problems, and one object of the present invention is to provide a spectrum analysis system and a spectrum analysis method capable of easily determining which type of anomaly appears even for users who are inexperienced in analysis of measurement spectrum waveforms.

A spectrum analysis system according to a first aspect of the present invention includes a measurer configured to measure an inspection target; a display configured to display a measurement spectrum waveform based on a measurement result measured by the measurer; and a controller configured to control a function of displaying a plurality of first anomaly items that indicate a type(s) of anomaly/anomalies in representation of the measurement spectrum waveform, and are selectable on the display, wherein the controller is configured to control a function of displaying a first reference spectrum waveform for reference to a representation form(s) of an anomaly/anomalies corresponding to one of the first anomaly items on the display for each of the plurality of first anomaly items.

A spectrum analysis method according to a second aspect of the present invention includes a step of displaying a measurement spectrum waveform based on a measurement result acquired by measuring an inspection target on a display; a step of displaying a plurality of first anomaly items that indicate a type(s) of anomaly/anomalies in representation of the measurement spectrum waveform with being selectable on the display; a step of displaying a first reference spectrum waveform for reference to a representation form(s) of an anomaly/anomalies corresponding to one of the first anomaly items in response to selection from the plurality of first anomaly items on the display.

In the spectrum analysis system according to the first aspect and the spectrum analysis method according to the and the second aspect, as discussed above, a first reference spectrum waveform for reference to a representation form(s) of an anomaly/anomalies corresponding to one of the first anomaly items can be displayed in response to selection from the plurality of first anomaly items on the display. Accordingly, because the first reference spectrum waveform for reference to a representation form(s) of an anomaly/anomalies corresponding to one of the first anomaly items can be displayed on the display, users can visually recognize the displayed first reference spectrum waveform, and as a result can easily recognize the representation form(s) corresponding to a type(s) of the anomaly/anomalies. Consequently, users can easily determine one of the first anomaly items that correspond to the anomaly/anomalies appearing in the measurement spectrum waveform by comparing the measurement spectrum waveform with the first reference spectrum waveform. Therefore, even users who are inexperienced in analysis of measurement spectral waveforms acquired by measurement results can easily determine which types of anomalies appear in measurement spectrum waveforms.

### BRIEF DESCRIPTION OF THE DRAWINGS

FIG. 1 is a block diagram entirely showing a configuration of a spectrum analysis system according to a first embodiment.
FIG. 2 is a diagram illustrating an exemplary measurement spectrum waveform displayed on a display.
FIG. 3 is a diagram illustrating an exemplary screen relating to spectrum check information according to the first embodiment.
FIG. 4 is a diagram illustrating an exemplary menu of a plurality of anomaly items in the spectrum check information.
FIG. 5 is a diagram illustrating an exemplary reference spectrum waveform when an anomaly item "Noise is large" is selected in the menu of the plurality of anomaly items shown in FIG. 4.
FIG. 6 is a diagram illustrating an exemplary menu of a plurality of anomaly items in a second stage after an anomaly item indicating an anomaly "Noise is large" is selected.
FIG. 7 is a diagram illustrating an exemplary reference spectrum waveform when an anomaly item "Noise appears in wave number range 4,000 cm⁻¹ to 3,000 cm⁻¹ and range 2,000 cm⁻¹ to 1,300 cm⁻¹" is selected in the menu of the plurality of anomaly items in the second stage shown in FIG. 6.
FIG. 8 is a diagram illustrating an exemplary indication of solution information after selection of an anomaly item is determined from FIG. 7.
FIG. 9 is a diagram illustrating an exemplary indication when selecting operation on a guide image display button in the solution information is accepted.
FIG. 10 is a diagram illustrating an exemplary reference spectrum waveform when an anomaly item "Noise appears in wave number range 700 cm⁻¹ to 400 cm⁻¹" is selected in the menu of the plurality of anomaly items in the second stage shown in FIG. 6.
FIG. 11 is a diagram illustrating an exemplary reference spectrum waveform when an anomaly item "Noise appears in entire range" is selected in the menu of the plurality of anomaly items in the second stage shown in FIG. 6.
FIG. 12 is a diagram illustrating an exemplary reference spectrum waveform when an anomaly item "Interference fringes appear" is selected in the menu of the plurality of anomaly items shown in FIG. 4.
FIG. 13 is a diagram illustrating an exemplary menu of a plurality of measurement items after the anomaly item "Interference fringes appear" is selected.
FIG. 14 is a diagram illustrating an exemplary indication of solution information after selection of an anomaly item is determined from FIG. 13.
FIG. 15 is a flowchart illustrating control processing of a spectrum analysis method according to the first embodiment.
FIG. 16 is a block diagram entirely showing a configuration of a spectrum analysis system according to a second embodiment.
FIG. 17 is a diagram illustrating an exemplary indication of the reference spectrum waveform according to the second embodiment.

### DESCRIPTION OF THE PREFERRED EMBODIMENT

Embodiments embodying the present invention will be described with reference to the drawings.

### First Embodiment

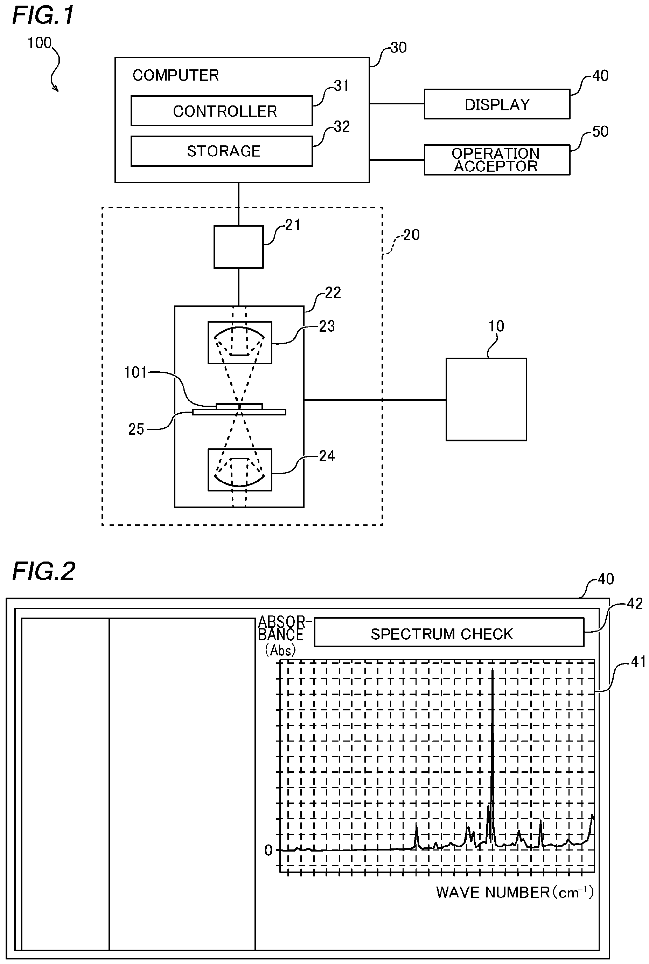

The following description describes an entire configuration of a spectrum analysis system 100 according to a first embodiment of the present invention with reference to FIGS. 1 to 14.

### (Configuration of Spectrum Analysis System)

As shown in FIG. 1, the spectrum analysis system 100 according to the first embodiment includes a light source 10, a measurer 20, a computer 30, a display 40 and an operation acceptor 50. The spectrum analysis system 100 is configured to analyze an inspection target 101 by irradiating the inspection target 101 with infrared light. Specifically, the spectrum analysis system 100 analyzes the inspection target 101 based on Fourier transform infrared spectrophotometer (FTIR: Fourier Transform InfraRed Spectrophotometer) using an infrared microscope (measurer 20) .

The light source 10 emits infrared light to irradiate the inspection target 101 with the infrared light. The light source 10, for example, has an infrared light source (not shown) that emits infrared light. In addition, the light source 10 includes fixed mirrors, movable mirrors, and light guide members such as beam splitters. In the light source 10, the light guide members make up a Michelson interferometer for interferometry of infrared light. The light source 10 emits an interferogram, which is interfered infrared light interferogram whose amplitude fluctuates in time, to the measurer 20.

The measurer 20 measures the inspection target 101. For example, the measurer 20 is an infrared microscope. The measurer 20 guides infrared light from the light source 10 to the inspection target 101. The measurer 20 is configured to measure the inspection target 101 by detecting infrared light with which the inspection target 101 is irradiated. The measurer 20 detects the infrared light reflected by the inspection target 101 or the infrared light passing through the inspection target 101. Specifically, the measurer 20 includes a detector 21 and a light guide 22. The detector 21 detects the infrared light, and provides detection signals based on the detected infrared light to the controller 31. The detector 21 includes, for example, an MCT (Mercury cadmium telluride) detector or a TGS (Tri-Glycine sulfate) detector. The light guide 22 includes a reflector that guides infrared light from the light source 10, and optical components such as half mirrors. For example, the light guide 22 includes an upper Cassegrain mirror 23 and a lower Cassegrain mirror 24 as optical components. The upper Cassegrain mirror 23 and the lower Cassegrain mirror 24 reflect the infrared light from the light source 10. In addition, the measurer 20 includes a stage 25 on which the inspection target 101 are placed. In the measurer 20, the inspection target 101 placed on the stage 25 is irradiated with the infrared light guided by the light guide 22 including upper Cassegrain mirror 23 and lower Cassegrain mirror 24.

The computer 30 includes a controller 31 and a storage 32. The controller 31 controls the entire operation of the spectrum analysis system 100. The controller 31 controls indications of the display 40. In addition, the controller 31 controls the measurement of the inspection target 101 using infrared light by controlling operations of parts of the light source 10 and the measurer 20. The controller 31 is, for example, a processor or arithmetic circuitry. For example, the controller 31 includes an arithmetic unit such as central processing unit (CPU). The storage 32 is a storage medium configured to store programs to be executed by the controller 31, and parameters. For example, the storage 32 includes storage device such as a nonvolatile memory, a hard disk drive (HDD: Hard Disk Drive) or SSD (Solid State Drive).

The display 40 is configured to display image information and text information based on the control processing by the controller 31. For example, the display 40 includes a liquid crystal display, an organic electroluminescence display, etc. The operation acceptor 50 is configured to accept user inputs from users. The operation acceptor 50 includes a keyboard and a pointing device, such as a computer mouse, for example. The operation acceptor 50 can provide the user input signals in accordance with the accepted user inputs to the controller 31.

The spectrum analysis system 100 uses three types of measurement techniques of reflection method, transmission method and ATR (Attenuated Total Reflection) to measure the infrared light with which the inspection target 101 is irradiated. In the reflection method, infrared light reflected by a surface of the inspection target 101 is measured. In the transmission method, infrared light passing through the inspection target 101 is measured. In the ATR method, an absorption spectrum of a surface part of the inspection target 101 is measured by bringing the inspection target 101 in tight contact with a prism, which is a high refractive index medium, and measuring total reflected light that penetrates the inspection target 101 from the prism and then reflects inside the inspection target.

As shown in FIG. 2, the controller 31 produces a measurement spectrum waveform 41 based on a measurement result measured by the measurer 20. Specifically, the controller 31 acquires detection signals from the detector 21 of the measurer 20. The controller 31 then produces the measurement spectrum waveform 41, which is a spectrum waveform represented by a wave numbers (cm⁻¹: per centimeter) as a horizontal axis and absorbance (Abs) or transmittance (%) as a vertical axis, on the detected signals. The display 40 displays the measurement spectrum waveform 41 produced by the controller 31 based on the measurement result of the measurer 20.

In the controller 31, based on the input operation received by the operation acceptor 50, analysis conditions are set before the inspection target 101 is measured. The analysis conditions include, for example, selection from reflection method, transmission method and ATR method, and selection from absorbance indication and transmittance indication in the indication of the measurement spectrum waveform 41. In other words, analysis condition setting, one combination is selected as a condition set for the measurement spectrum waveform 41 to be displayed as measurement result from six combinations, which are combinations of one of the three types of measurement techniques of reflection method, transmission method and ATR method, and one of two types of indications of absorbance indication and transmittance indication. The controller 31 produces the measurement spectrum waveform 41 in accordance with the analysis condition set selected. After BKG measurement (background measurement) that measures a background part of the inspection target 101, the controller 31 measures a part to be measured and generates the measurement spectrum waveform 41.

### (Spectrum Check)

As shown in FIG. 2, the controller 31 indicates a spectrum check button 42 together with the measured spectrum waveform 41. The controller 31 is configured to check a spectrum when determining that an input operation for selecting the spectrum check button 42 is accepted based on the input operation through the operation acceptor 50.

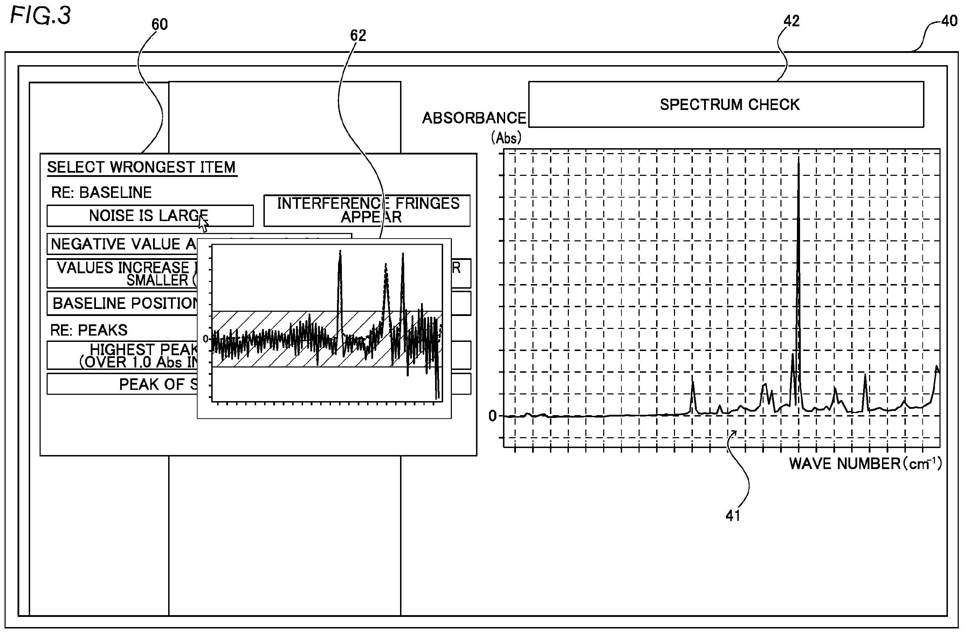

As shown in FIG. 3, the controller 31 displays spectrum check information 60 on the display 40 after checking the spectrum. In the spectral check processing, if an anomaly appears in the display of the measurement spectrum waveform 41 of the measurement result, the spectral check information 60, which is information for users as to guidance on how to solve the anomaly, is displayed in the display 40. The spectral check information 60 is displayed adjacent to the measurement spectrum waveform 41 on the display 40.

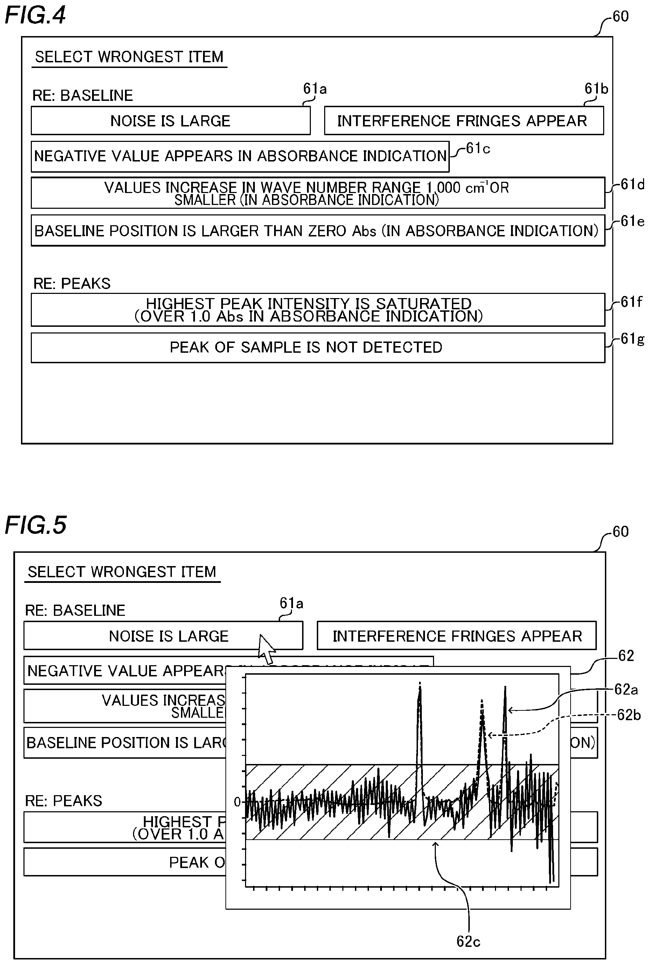

As shown in FIG. 4, the controller 31 is configured to control a function of displaying a plurality of anomaly items 61a to 61g indicating the types of anomalies in the displayed measurement spectrum waveform 41 of the infrared light with being selectable in the spectrum check information 60 on the display 40. The anomaly items 61a to 61g are examples of "first anomaly items" in the claims.

The anomaly items 61a to 61g indicate the types of anomalies that are caused by anomalies in the measurement of the inspection target 101 and the generation of the measurement spectrum waveform 41, and appear in the displayed measurement spectrum waveform 41, which is an indication of the measurement result. In other words, the anomaly items 61a to 61g indicate representation forms in which any anomaly occurs in comparison with proper measurement spectrum waveforms 41. A user selects one item corresponding to an anomaly that appears in an indication of the measurement spectrum waveform 41, which is the measurement result, from the plurality of anomaly items 61a to 61g displayed with being selectable on the display 40. In other words, the anomaly items 61a to 61g are items of interest on which the user has to pay attention considering that any anomaly appears in the displayed spectrum waveform 41. In the first embodiment, the controller 31 is configured to change types of the plurality of anomaly items 61a to 61g displayed on the display 40 in accordance with predetermined analysis conditions. In other words, the controller 31 can reduce the number of types of the plurality of anomaly items 61a to 61g displayed on the display 40 in accordance with predetermined analysis conditions. The measurement spectrum waveform 41 in the absorbance indication in the measurement measured by the transmission method is illustratively shown in FIG. 4 to 14.

As shown in FIG. 4, in a case in which a combination of the absorbance indication and the transmission method is previously selected as the analysis condition, the controller 31 separately displays a plurality of anomaly items 61a to 61e indicating the types of the anomalies relating to a baseline part of the measurement spectrum waveform 41, and a plurality of anomaly items 61f and 61g indicating types of the anomalies relating to peak parts of the measurement spectrum waveform 41 with being selectable on the display 40. Specifically, the controller 31 is configured to a function of separately displaying the anomaly items 61a to 61e that indicate types of anomalies including noise in a baseline part, interference fringes in a baseline part, anomalous baseline part position and anomalous baseline part shape with being selectable on the display 40. In addition, the controller 31 displays a plurality of anomaly items 61f and 61g that indicate types of anomalies including saturation of a peak part and detection failure of a peak part with being selectable on the display 40. The peak part is a part of the measurement spectrum waveform 41 in which absorbance of infrared light sharply increases (transmittance sharply decreases), and as a result the peak part indicates a wavenumber at which absorption of infrared light is detected. The baseline part is a part other than the peak part, in other words, a part in which absorption of infrared light is not detected and absorbance is almost zero (transmittance is almost 100%).

For example, in a case in which a combination of the absorbance indication and the transmission method is selected as the analysis condition, the anomaly item 61a is an item that indicates an anomaly "Noise is large" in the baseline part. The anomaly item 61b indicates an anomaly "Interference fringes appear" in the baseline part. The anomaly item 61c indicates an anomaly "Negative value appears in absorbance indication" in the baseline part. The anomaly item 61d indicates an anomaly "Values increase in wave number range 1,000 cm⁻¹ or smaller" in the baseline part. The anomaly item 61e indicates an anomaly "Baseline position is larger than zero" in the baseline part. The anomaly item 61f indicates an anomaly "Highest peak intensity is saturated (over 1.0 in absorbance indication)" in the peak part. The anomaly item 61g indicates an anomaly "Peak of sample is NOT detected" in the peak part. In addition, in the menu of the spectrum check information 60, text information "Select wrongest item" is displayed to urge a user to select one of the items. In the menu of spectral check information 60, the text information "Re: Baseline" indicating types of anomalies in the indication of the baseline part, and the text information of "Re: Peaks" indicating types of anomalies in the indication of the peak parts may be displayed in different colors.

As shown in FIG. 5, in the first embodiment, the controller 31 displays a reference spectrum waveform 62 corresponding to one of the plurality of anomaly items 61a to 61g relating to the peak parts and the baseline part in response to the selection from the plurality of anomaly items 61a to 61g on the display 40. In other words, the controller 31 displays the plurality of anomaly items 61a to 61g with which reference spectrum waveforms 62 are associated with being selectable on the display. For example, the operation acceptor 50 accepts a selecting operation that selects one item that indicates "Noise is large" from the anomaly items 61a to 61g displayed in the spectrum check information 60 on the display 40. The controller 31 displays one reference spectrum waveform 62 corresponding to the selected one anomaly item 61a on the display 40 in response to the selecting operation accepted by the operation acceptor 50. Specifically, when a pointer indicated on the display 40 overlaps an area of the anomaly item 61a in response to a position of a pointing devices such as computer mouse of the operation acceptor 50 (mouse-over operation), the controller 31 determined that the anomaly item 61a is selected, and displays the reference spectrum waveform 62 corresponding to the anomaly item 61a. The reference spectrum waveform 62 corresponding to one of the plurality of anomaly items 61a to 61g shown in FIG. 5 is an example of a "first reference spectrum waveform" in claims.

The reference spectrum waveforms 62 corresponding to the plurality of anomaly items 61a to 61g are indications for reference to representation forms of anomalies. In the first embodiment, the reference spectrum waveforms 62 are sample waveforms previously associated to the plurality of anomaly items 61a to 61g corresponding to their types of anomalies. The reference spectrum waveforms 62, which are previously-associated sample waveforms, are stored in the storage 32. The controller 31 is configured to control a function of displaying one of the reference spectrum waveforms 62, which are stored in the storage 32, separately from the measurement spectrum waveform 41 as the measurement result on the display 40 in response to the selection from the plurality of anomaly items 61a to 61g.

The reference spectrum waveform 62 includes, for example, an anomalous waveform 62a, which has a feature of the anomaly corresponding the anomaly item 61a, and a normal waveform 62b, which represents no anomaly corresponding the anomaly item 61a. For example, in the reference spectrum waveform 62 corresponding to the anomaly item 61a is shown by superimposing the anomalous waveform 62a in which noises appear entirely in the baseline part onto the normal waveform 62b without noise in the baseline part. The anomalous waveform 62a and the normal waveform 62b are displayed in different indication forms. Although the anomalous waveform 62a is shown by a solid line and the normal waveform 62b is shown by dotted lines in FIG. 5, their indication forms may be modified so that the anomalous waveform 62a and the normal waveform 62b are shown in different colors.

The controller 31 is configured to control a function of displaying the reference spectrum waveform 62 with an attention area 62c corresponding to a type of an anomaly being recognizably displayed in the measurement spectrum waveform 41 in response to the selection from the plurality of anomaly items 61a to 61g on the display 40. For example, when the anomaly item 61a is selected in the spectrum check information 60, an area defined by the entire range of the wave number (horizontal axis) and a predetermined range centering zero of absorbance (vertical axis) is recognizably displayed as the attention area 62c to indicate a noise area in which noises appear entirely in the baseline part. For example, the controller 31 displays an area of the attention area 62c in translucent blue in the reference spectrum waveform 62 to recognizably indicate the attention area 62c. The attention area is illustratively indicated by hatching in FIG. 5 so that the attention area is differently shown from the other parts.

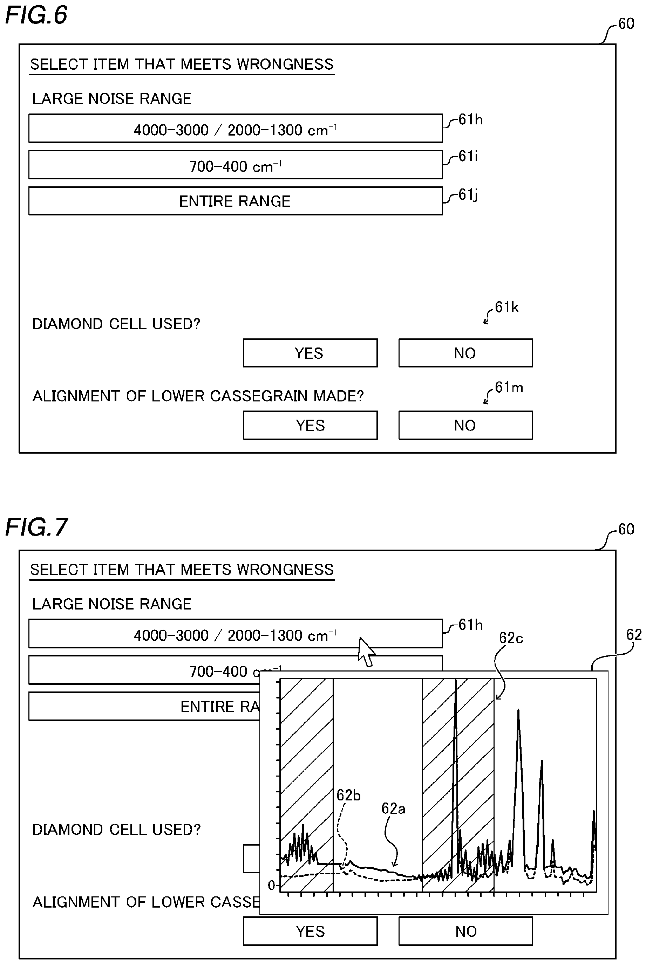

As shown in FIG. 6, the controller 31 is configured to control a function of displaying a plurality of additional anomaly items 61h to 61j each of which serves to identify a type of the anomaly, and the plurality of additional anomaly items are selectable on the display 40 and correspond to one anomaly item 61a selected from the plurality of anomaly items 61a to 61g, For example, when the anomaly item 61a is selected by the mouse-over operation and clicked so that the selection of the anomaly item 61a is determined in accordance with the clicking operation, which is accepted by the operation acceptor 50, the controller 31 displays the anomaly items 61h to 61j in a second stage, which serve to identify a type of the anomaly, corresponding to the anomaly item 61a in a first stage in the spectrum check information 60 on the display 40. The anomaly items 61h to 61j indicate the types of anomalies that appear in the displayed measurement spectrum waveform 41 similar to the anomaly item 61a. The anomaly items 61h to 61j in the second stage indicate more detailed anomalies corresponding to the anomaly item 61a in the first stage. For example, in a case in which the anomaly item 61a in the first stage is an anomaly item that indicates "Noise is large" in the baseline part, the anomaly items 61h to 61j in the second stage are detailed items indicating which range the noise appears in the baseline part. Specifically, the anomaly item 61h is an item indicating an anomaly in which noise appears in a wave number range 4,000 cm⁻¹ to 3,000 cm⁻¹ and a wave number range 2,000 cm⁻¹ to 1,300 cm⁻¹ in the baseline part. The anomaly item 61i is an item indicating an anomaly in which noise appears in a wave number range 700 cm⁻¹ to 400 cm⁻¹ in the baseline part. The anomaly item 61j is an item indicating an anomaly in which noise appears entirely in the baseline part. The anomaly items 61h to 61i are examples of "second anomaly items" in the claims.

As shown in FIG. 7, the controller 31 is configured to control a function of displaying on the display 40 the reference spectrum waveform 62 for reference to an anomaly corresponding to one of the plurality of anomaly items 61h to 61j in response to selection from the plurality of anomaly items 61h to 61j. Similar to a case of the reference spectrum waveform 62 corresponding to one of the plurality of anomaly items 61a to 61g, when one of the plurality of anomaly items 61h to 61j is selected by mouse-over operation, the controller 31 displays the reference spectrum waveform 62 corresponding to one of the anomaly items 61h to 61j. The reference spectrum waveform 62 corresponding to one of the plurality of anomaly items 61h to 61j shown in FIGS. 7, 10 and 11 is an example of a "second reference spectrum waveform" in claims.

For example, when determining that the anomaly item 61h is selected, the controller 31 displays the reference spectrum waveform 62 that includes the anomalous waveform 62a in which noise appears in a wave number range 4,000 cm⁻¹ to 3,000 cm⁻¹ and a wave number range 2,000 cm⁻¹ to 1,300 cm⁻¹ in the baseline part, and the normal waveform 62b indicating that no anomaly appears. In this case, the attention areas 62c that indicate the wave number range 4,000 cm⁻¹ to 3,000 cm⁻¹ and the wave number range 2,000 cm⁻¹ to 1,300 cm⁻¹ are shown in the reference spectrum waveform 62.

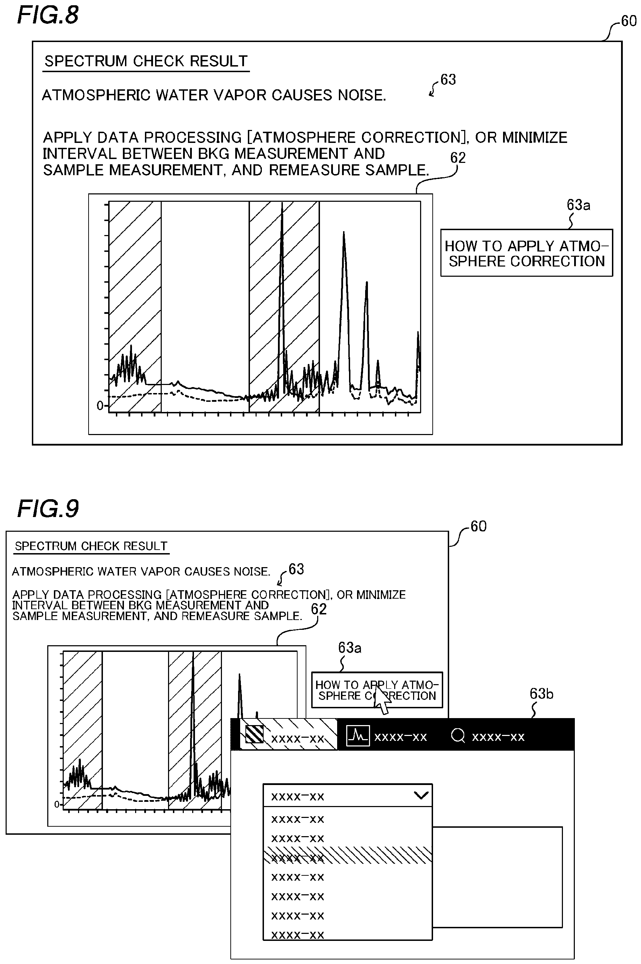

As shown in FIG. 8, the controller 31 is configured to control a function of displaying solution information 63 indicating the solution of the anomaly corresponding to one of the plurality of anomaly items 61a to 61g together with the reference spectrum waveform 62 corresponding to the one of plurality of anomaly items 61a to 61g on the display 40. For example, in a case in which the anomaly item 61h is selected by the mouse-over operation, when clicking operation that determines selection of the anomaly item 61h is accepted by the operation acceptor 50, the controller 31 determines that selection of the anomaly item 61a and the anomaly item 61h is made. In other words, after the anomaly item 61a is selected in the screen shown in FIG. 5, when the anomaly item 61h is selected in the screen shown in FIG. 7, the controller 31 displays the solution information 63 indicating the solution of the anomaly corresponding to the selected anomaly item 61a and anomaly item 61h together with the reference spectrum waveform 62 corresponding to the anomaly item 61a and the anomaly item 61h in the spectrum check information 60 on the display 40. Subsequently, when the anomaly item 61a, which indicates an anomaly item in which noise is large, and the anomaly item 61h, which indicates an anomaly in which noise appears in a wave number range 4,000 cm⁻¹ to 3,000 cm⁻¹ and a wave number range 2,000 cm⁻¹ to 1,300 cm⁻¹ are selected, the solution information 63 is displayed including information indicating a cause of the anomaly "Atmospheric water vapor causes noise", and text information indicating the solution to the anomaly "Apply data processing [Atmosphere Correction], or Minimize interval BKG measurement and sample measurement and remeasure sample" The controller 31 displays the solution information 63 and the reference spectrum waveform 62 in upper and lower parts of the display 40, respectively. The solution information 63 includes a guide image display button 63a.

As shown in FIG. 9, for example, when mouse-over operation on the guide image display button 63a is accepted as selecting operation to select the guide image display button 63a, the controller 31 displays a solution image 63b indicating solution to the anomaly on the display 40. The solution image 63b is an image indicating how to operate the apparatus or measure the sample to solve the anomaly.

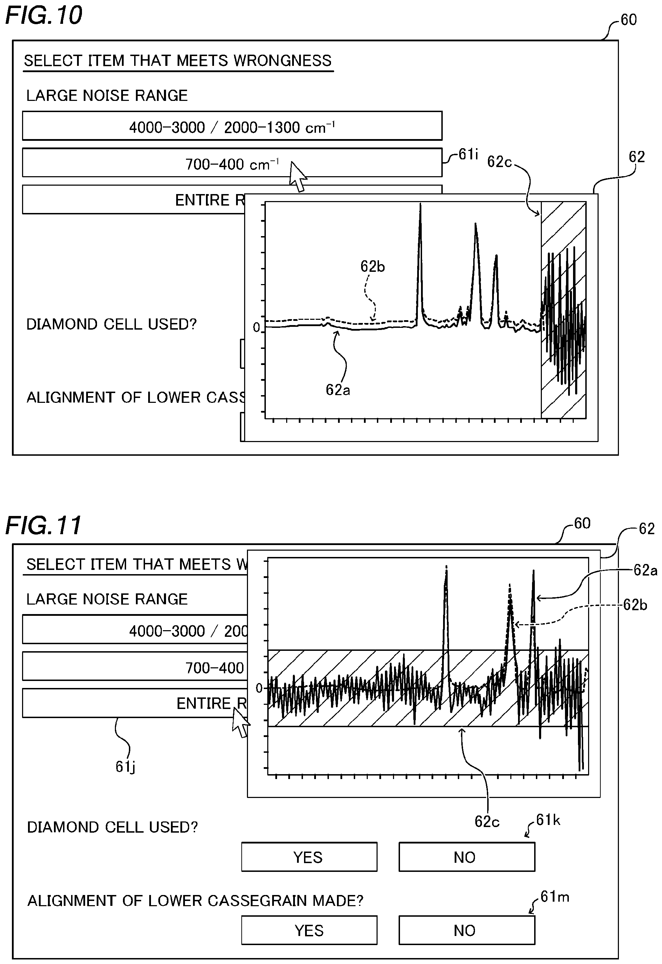

As shown in FIG. 10, in the screen in which the plurality of anomaly items 61h to 61j are displayed with being selectable in the spectrum check information 60 on the display 40 (see FIG. 6), when determining that the anomaly item 61i is selected by mouse-over operation, the controller 31 displays the reference spectrum waveform 62 corresponding to the selected anomaly item 61i that includes the anomalous waveform 62a in which noise appears in a wave number range 700 cm⁻¹ to 400 cm⁻¹ in the baseline part, and the normal waveform 62b indicating that no anomaly appears. In this case, the attention area 62c that indicates the wave number range 700 cm⁻¹ to 400 cm⁻¹ is shown in the reference spectrum waveform 62. When the anomaly item 61i is selected by the mouse-over operation and clicked so that the selection of the anomaly item 61i is determined in accordance with the clicking operation, which is accepted by the operation acceptor 50, the controller 31 determines that selection of the anomaly item 61a and the anomaly item 61i is made. In this case, similar to the anomaly item 61j, the controller 31 displays the solution information 63 indicating the solution of the anomaly corresponding to the selected anomaly item 61a and anomaly item 61i together with the reference spectrum waveform 62 corresponding to the anomaly item 61a and the anomaly item 61i in the spectrum check information 60 on the display 40.

As shown in FIG. 11, in the screen in which the plurality of anomaly items 61h to 61j are displayed with being selectable in the spectrum check information 60 on the display 40 (see FIG. 6), when determining that the anomaly item 61j is selected by mouse-over operation, the controller 31 displays the reference spectrum waveform 62 corresponding to the selected anomaly item 61j that includes the anomalous waveform 62a in which noises appears in the entire range in the baseline part, and the normal waveform 62b indicating that no anomaly appears. In this case, an area defined by the entire range of the wave number (horizontal axis) and a predetermined range centering zero of absorbance (vertical axis) is recognizably displayed in the reference spectrum waveform 62 as the attention area 62c to indicate a noise area in which noises appear entirely in the baseline part.

In addition, in this case, when the anomaly item 61j is selected by the mouse-over operation and clicked so that the selection of the anomaly item 61j is determined in accordance with the clicking operation, which is accepted by the operation acceptor 50, the controller 31 determines that selection of the anomaly item 61a and the anomaly item 61j is made. If determining that selection of the anomaly item 61j is made, the controller 31 accepts inputs into measurement items 61k and 61m before displaying the response information 63. In other words, after accepting the selection from the anomaly items 61a to 61g in the first stage, and then accepting the selection from the anomaly items 61h to 61j in the second stage, the controller 31 displays the measurement items 61k and 61m for identifying a type of the anomaly with being selectable on the display 40. For example, the measurement items 61k and 61m are items to ask a user about questions about measurement by the measurer 20. The measurement item set 61k asks the user whether a diamond cell was used in the measurement. The measurement item set 61m asks the user whether position alignment of the lower Cassegrain mirror 24 was made in the measurement. In accordance with selections from the anomaly items 61a to 61g in the first stage and from the anomaly items 61h to 61j in the second stage, and selections in the measurement items 61k and 61m, the controller 31 displays the solution information 63 corresponding to these selections on the display 40.

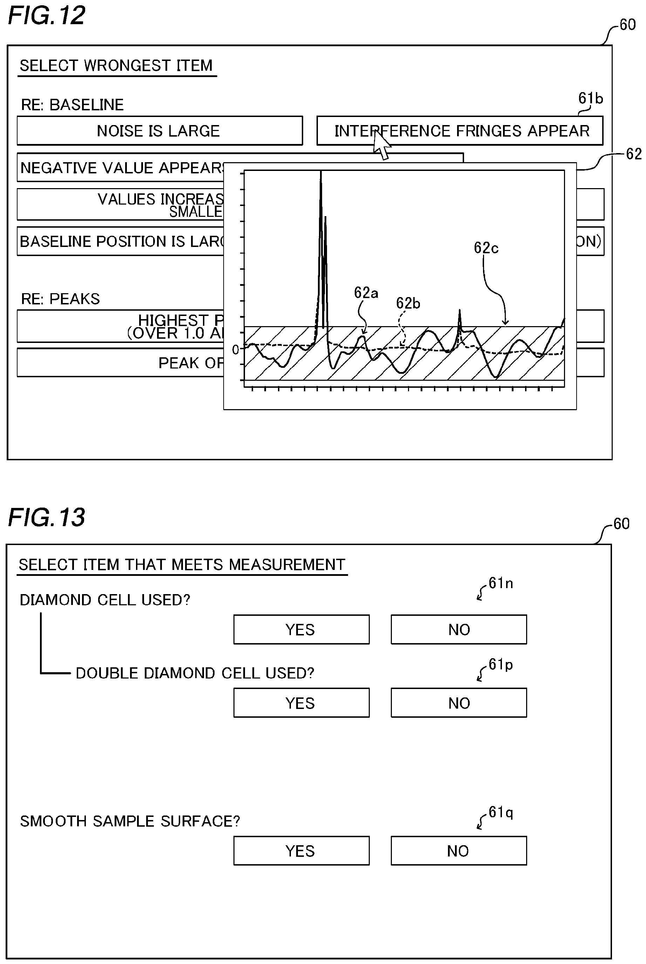

As shown in FIG. 12, in the screen in which the plurality of anomaly items 61a to 61g are displayed with being selectable in the spectrum check information 60 on the display 40 (see FIG. 4), when the anomaly item 61b is selected by mouse-over operation, the controller 31 determines that the anomaly item 61b is selected. The controller 31 displays the reference spectrum waveform 62 corresponding to the anomaly item 61b similar to a case in which the anomaly item 61a is selected.

As shown in FIG. 13, when the anomaly item 61b is selected by the mouse-over operation and clicked so that the selection of the anomaly item 61b is determined in accordance with the clicking operation, which is accepted by the operation acceptor 50, the controller 31 displays a plurality of measurement items 61n, 61p and 61q on the display 40. In other words, the controller 31 does not display any anomaly item in the second stage id the anomaly item 61b is selected. The measurement items 61n, 61p and 61q are items to ask a user about questions about measurement by the measurer 20 similar to the measurement items 61k and 61m. The measurement item set 61n asks the user whether a diamond cell was used in the measurement. The measurement item set 61p asks the user whether a double diamond cell was used in the measurement if the question in the measurement item set 61n was "Yes". The measurement item set 61q asks the user whether a surface of the sample (inspection target 101) is smooth.

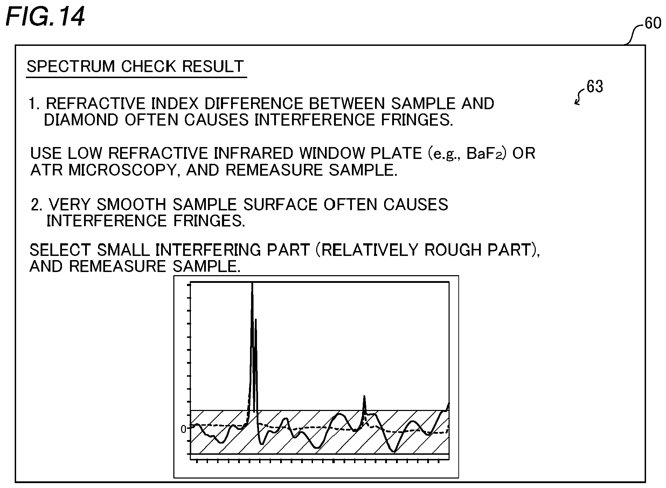

As shown in FIG. 14, when receiving selecting operations of the plurality of measurement items 61n, 61p and 61q, the controller 31 displays the solution information 63 indicating the solution of the anomaly corresponding to the anomaly item 61b and to the answers in the plurality of measurement items 61n, 61p and 61q together with the reference spectrum waveform 62 corresponding to the anomaly item 61b in the spectrum check information 60 on the display 40. An exemplary plurality of solutions are displayed by the controller 31 in FIG. 14.

In the screen in which the plurality of anomaly items 61a to 61g are displayed with being selectable in the spectrum check information 60 on the display 40 (see FIG. 4), when one of the anomaly items 61c to 61g is selected by mouse-over operation, and is clicked so that the selection of the one of the anomaly items 61c to 61g is accepted by clicking, a function of displaying similar to the anomaly items 61a and the anomaly items 61b is controlled. The controller 31 may be configured when determining selection from the anomaly items 61a to 61g in the first stage to display the solution information 63 corresponding to the selected one of the anomaly items 61a to 61g together with the reference spectrum waveform 62 corresponding to the selected one of the anomaly items 61a to 61g on the display 40 without displaying the anomaly items in the second stage and measurement items. In other words, the controller 31 is configured in response to selection of one of the anomaly items 61a to 61g to control at least one of a function of displaying the anomaly items in the second stage with being selectable, a function of displaying the measurement items, which are are items to ask a user about questions about measurement, with being selectable, and a function of displaying the solution information 63 corresponding to the selected one of the anomaly items 61a to 61g.

### (Spectrum Analysis Method of First Embodiment)

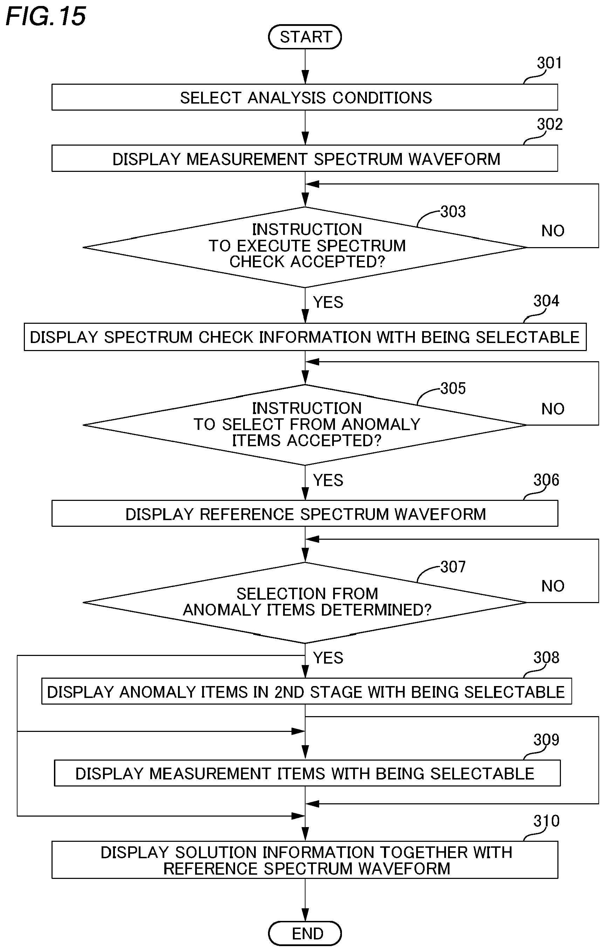

The following description describes processing flow of a spectrum analysis method using the spectrum analysis system 100 according to the first embodiment with reference to FIG. 15. The spectrum analysis method according to the first embodiment is executed by control of the controller 31 of the computer 30.

In step 301, an analysis condition set is selected. For example, one of the three types of measurement methods, which are reflection method, transmission method and ATR method, is selected by an input instruction through the operation acceptor 50. In addition, one of absorbance indication and transmittance indication is selected.

Subsequently, in step 302, the measurement spectrum waveform 41 is displayed on the display 40. Specifically, infrared light is emitted by the light source 10, and the infrared light with which the inspection target 101 is irradiated is detected by the detector 21 of the measurer 20. Detection signals from the detector 21 are acquired as a measurement result. The measurement spectrum waveform 41 is the displayed on the display 40 based on the acquired measurement result.

Subsequently, in step 303, it is determined whether an input instruction to execute spectrum check processing is accepted. If it is determined that an input instruction to execute spectrum check processing is accepted, the procedure goes to step 304. If it is determined that no input instruction to execute spectrum check processing is accepted, the procedure waits for control processing.

In step 304, the spectrum check information 60 is displayed on the display 40, and a plurality of anomaly items 61a to 61g are displayed with being selectable.

In step 305, it is determined whether an instruction to select one of the plurality of anomaly items 61a to 61g displayed on the display 40 is accepted. Specifically, it is determined whether any of the plurality of anomaly items 61a to 61g is selected by mouse-over operation. If it is determined that an instruction to select one of the plurality of anomaly items 61a to 61g is accepted, the procedure goes to step 306. If it is determined that no instruction to select one of the plurality of anomaly items 61a to 61g is accepted, the procedure waits for control processing.

In step 306, the reference spectrum waveform 62 for reference to an anomaly corresponding to one of the plurality of anomaly items 61a to 61g is displayed in response to selection from the plurality of anomaly items 61a to 61g. Specifically, the reference spectrum waveform 62 corresponding to one selected from the plurality of anomaly items 61a to 61g is displayed on the display 40. If the mouse-over operation on the selected anomaly item is canceled by moving the pointer, indication of the reference spectrum waveform 62 is canceled, and the procedure returns to step 305.

Subsequently, in step 307, it is determined whether selection of one of the plurality of anomaly items 61a to 61g is made. Specifically, it is determined whether clicking operation is made with one of the plurality of anomaly items 61a to 61g being selected by the mouse-over operation. If it is determined that selection of one of the plurality of anomaly items 61a to 61g is made, the procedure goes to step 308, step 309 or step 310 depending on the selected anomaly item. If it is determined that no selection of one of the plurality of anomaly items 61a to 61g is made, the procedure waits for control processing.

In step 308, the plurality of anomaly items in the second stage corresponding to the selected item from the plurality of anomaly items 61a to 61g are displayed with being selectable. In this case, similar to step 305 and step 306, it is determined whether an instruction to select one of the plurality of anomaly items in the second stage is accepted, and if it is determined that an instruction to select one of the plurality of anomaly items in the second stage is accepted, the reference spectrum waveform 62 corresponding to the selected anomaly item is displayed on the display 40. After that, if it is determined that one of the plurality of anomaly items in the second stage is clicked, the procedure goes to step 309 or step 310 depending on the selected anomaly item in the second stage.

In step 309, depending on the anomaly item of the first stage selected in step 307 or the anomaly item in the second stage selected in step 308, the measurement items to ask a user about questions about measurement is displayed with being selectable on the display 40. If it is determined that selection from the measurement items is accepted, the procedure goes to step 310.

In step 310, the solution information 63 is displayed together with the reference spectrum waveform 62 on the display 40. Specifically, the solution information 63 corresponding to the anomaly item in the first stage selected in step 307, the anomaly item in the second stage selected in step 308, and the measurement item selected in step 309 is displayed together with the reference spectrum waveform 62 corresponding to the anomaly item in the first stage selected in step 307, the anomaly item in the second stage selected in step 308, and the measurement item selected in step 309 on the display 40.

### Advantages of First Embodiment

In the first embodiment, the following advantages are obtained.

In the first embodiment, as discussed above, a reference spectrum waveform 62 (first reference spectrum waveform) for reference to anomalies corresponding to a plurality of anomaly items 61a to 61g (first anomaly items) is displayed in response to selection from a plurality of anomaly items 61a to 61g on the display 40. Accordingly, because the reference spectrum waveform 62 for reference to a representation form of an anomaly corresponding to one of the plurality of anomaly items 61a to 61g can be displayed on the display 40, users can visually recognize the displayed reference spectrum waveform 62, and as a result can easily recognize the representation form corresponding to a type of the anomaly. Consequently, users can easily determine one of the anomaly items 61a to 61g that correspond to the anomaly appearing in the measurement spectrum waveform 41 by comparing the measurement spectrum waveform 41 with the reference spectrum waveform 62. Therefore, even users who are inexperienced in analysis of measurement spectral waveforms 41 acquired by measurement results can easily determine which type of anomaly appears in measurement spectrum waveforms 41.

In addition, additional advantages can be obtained by the aforementioned first embodiment added with configurations discussed below.

In the spectrum analysis system 100 according to the first embodiment, as discussed above, an operation acceptor 50 is provided and is configured to accept a selecting operation to select, from the plurality of anomaly items 61a to 61g (first anomaly items) displayed on the display 40, one of anomaly items 61a to 61g. The controller 31 displays one reference spectrum waveform 62 (first reference spectrum waveform) corresponding to the selected one anomaly item 61a on the display 40 in response to the selecting operation accepted by the operation acceptor 50. According to this configuration, because the reference spectrum waveform 62 corresponding to one selected from the anomaly items 61a to 61g is displayed on the display 40, it is possible to avoid complicated representation of the display 40 as compared with a case in which all of the reference spectrum waveforms 62 corresponding to the plurality of anomaly items 61a to 61g are displayed on the display 40. Consequently, it is possible to prevent reduction of legibility of the displayed reference spectrum waveform 62, and users can more easily determine which types of anomalies appear in measurement spectrum waveforms 41.

In the first embodiment, as discussed above, the controller 31 is configured to control a function of displaying a plurality of additional anomaly items 61h to 61j (second anomaly item) each of which serves to identify a type of the anomaly, and the plurality of additional anomaly items are selectable on the display 40 and correspond to one anomaly item 61a selected from the plurality of anomaly items 61a to 61g (first anomaly item); and the reference spectrum waveform 62 (second reference spectrum waveform) for reference to an anomaly corresponding to one of the plurality of anomaly items 61h to 61j is displayed in response to selection from the plurality of anomaly items 61h to 61j on the display 40. According to this configuration, because one of the anomaly items 61a to 61g is selected, and then one of the anomaly items 61h to 61j is further selected, the number of candidate types of anomalies in representation of the measurement spectrum waveform 41 can be reduced step by step to identify the anomaly in the measurement spectrum waveform. Consequently, it is possible to easily and exactly determine which type of anomaly appears even for users who are inexperienced in analysis of measurement spectral waveforms 41.

In the first embodiment, as discussed above, the controller 31 is configured to control a function of displaying the reference spectrum waveform 62 (first reference spectrum waveform) with an attention area 62c corresponding to a type of an anomaly being recognizably displayed in the measurement spectrum waveform 41 in response to the selection from the plurality of anomaly items 61a to 61g (first anomaly item) on the display 40. According to this configuration, because the attention area 62c is recognizably displayed in the reference spectrum waveform 62, users can easily know which area in the measurement spectrum waveform 41 they pay attention on to identify the anomaly by visually recognizing the attention area 62c in the reference spectrum waveform 62. Consequently, even users who are inexperienced in analysis of measurement spectral waveforms 41 can easily determine which type of anomaly appears in the measurement spectrum waveform 41.

In the first embodiment, as discussed above, the spectrum analysis system 100 includes a storage (32) configured to store a plurality of reference spectrum waveforms 62 (first reference spectrum waveforms), which are predetermined sample waveforms corresponding to the types of anomalies of the plurality of anomaly items 61a to 61g (first anomaly items). The controller 31 is configured to control a function of displaying one of the reference spectrum waveforms 62, which are stored in the storage 32, separately from the measurement spectrum waveform 41 on the display 40 in response to the selection from the plurality of anomaly items 61a to 61g. According to this configuration, because sample waveforms that represent features of representation forms of anomalies are previously specified as the reference spectrum waveforms 62, even users who are inexperienced in analysis of measurement spectral waveforms 41 can easily and exactly understand what the plurality of anomaly items 61a to 61g mean by visually recognizing the reference spectrum waveforms 62. Consequently, the users can more easily determine which type of anomaly appears in the measurement spectrum waveform 41.

In the first embodiment, as discussed above, the controller 31 is configured to control a function of displaying solution information 63 indicating the solution of the anomaly corresponding to one of the plurality of anomaly items 61a to 61g together with the reference spectrum waveform 62 (first reference spectrum waveform) corresponding to the one of plurality of anomaly items 61a to 61g on the display 40 (first anomaly items). According to this configuration, because the solution information 63 is displayed together with the reference spectrum waveform 62, users can visually recognize the reference spectrum waveform 62, represents a representation form of the anomaly, together with the solution information 63 whereby confirming solution to the anomaly. Consequently, because users can easily identify the type of the anomaly that appears in the measurement spectrum waveform 41, and can recognize the solution to the anomaly appearing, they can easily recognize which type of anomaly appears and how to solve the anomaly.

In the first embodiment, as discussed above, the controller 31 is configured to change types of the plurality of anomaly items 61a to 61g (first anomaly item) displayed on the display 40 in accordance with predetermined analysis conditions. According to this configuration, because types of the plurality of anomaly items 61a to 61g to be displayed in accordance with predetermined analysis conditions can be changed, it is possible to prevent improper anomaly items 61a to 61g from being displayed in accordance with predetermined analysis conditions specified. Consequently, because the users more easily selected one of proper anomaly items 61a to 61g from the plurality of anomaly items 61a to 61g, they can more easily determine which type of anomaly appears in the measurement spectrum waveform 41.

In the first embodiment, as discussed above, the controller (31) is configured to control a function of separately displaying the first anomaly items 61f and 61g (first anomaly items) that indicate types of the anomalies relating to peak parts of representation of the measurement spectrum waveform 41, and the first anomaly items 61a to 61e (first anomaly items) that indicate types of the anomalies relating to a baseline part of representation of the measurement spectrum waveform 41 with being selectable on the display 40; and a function of displaying the reference spectrum waveform 62 (first reference spectrum waveform) corresponding to one of the plurality of anomaly items 61a to 61g relating to the peak parts and the baseline part in response to the selection from the plurality of anomaly items 61a to 61g on the display 40. According to this configuration, because users can separately select one anomaly from a group of anomalies relating to the peak parts and from a group from anomalies relating to base line part in the measurement spectrum waveform 41, even a user who is inexperienced in analysis of the measurement spectrum waveform 41 more easily determine whether the peak parts or the base line part he or she pay attention on. Consequently, users can easily determine which type of anomaly appears in the measurement spectrum waveform 41.

In the first embodiment, as discussed above, the controller 31 is configured to control a function of separately displaying a plurality of anomaly items 61f and 61g (first anomaly items) that indicate types of anomalies including saturation of a peak part and detection failure of a peak part, which are at least one of saturation of a peak part(s), detection failure of a peak part(s), shape distortion of a peak part(s) and peak part inversion, and the anomaly items 61a to 61e (first anomaly items) that indicate types of anomalies including noise in a baseline part(s), interference fringes in a baseline part(s), anomalous baseline part position and anomalous baseline part shape with being selectable on the display 40. According to this configuration, users can select the anomaly appearing from the anomaly items 61a to 61g including saturation of a peak part and detection failure of a peak part, and noise in a baseline part(s), interference fringes in a baseline part(s), anomalous baseline part position and anomalous baseline part shape. Consequently, users can easily determine the type of the anomaly that appears in representation of the measurement spectrum waveform 41 by electing from saturation of a peak part and detection failure of a peak part, and noise in a baseline part(s), interference fringes in a baseline part(s), anomalous baseline part position and anomalous baseline part shape.

In the first embodiment, as discussed above, the measurer 20 is configured to measure the inspection target 101 by detecting infrared light with which the inspection target 101 is irradiated. The controller 31 is configured to control a function of displaying the reference spectrum waveform 62 (first reference spectrum waveform) in response to the selection from the plurality of anomaly items 61a to 61g (first anomaly item), which indicate types of anomalies in representation of the measurement spectrum waveform 41 based on the detection of the infrared light. Consequently, even users who are inexperienced in analysis of measurement spectral waveforms 41 of infrared light can easily determine which type of anomaly appears in the measurement spectrum waveform 41 of infrared light.

### Advantages of Spectrum Analysis Method of First Embodiment

According to the spectrum analysis method of this embodiment, the following advantages are obtained.

In the spectrum analysis method according to this embodiment, a reference spectrum waveform 62 (first reference spectrum waveform) for reference to anomalies corresponding to a plurality of anomaly items 61a to 61g (first anomaly items) is displayed in response to selection from a plurality of anomaly items 61a to 61g on the display 40. Accordingly, because the reference spectrum waveform 62 for reference to a representation form of an anomaly corresponding to one of the plurality of anomaly items 61a to 61g can be displayed on the display 40, users can visually recognize the displayed reference spectrum waveform 62, and as a result can easily recognize the representation form corresponding to a type of the anomaly. Consequently, users can easily determine one of the anomaly items 61a to 61g that correspond to the anomaly appearing in the measurement spectrum waveform 41 by comparing the measurement spectrum waveform 41 with the reference spectrum waveform 62. Therefore, it is possible to provide a spectrum analysis method that allows even users who are inexperienced in analysis of measurement spectral waveforms 41 acquired by measurement results to easily determine which type of anomaly appears in measurement spectrum waveforms 41.

### Second Embodiment

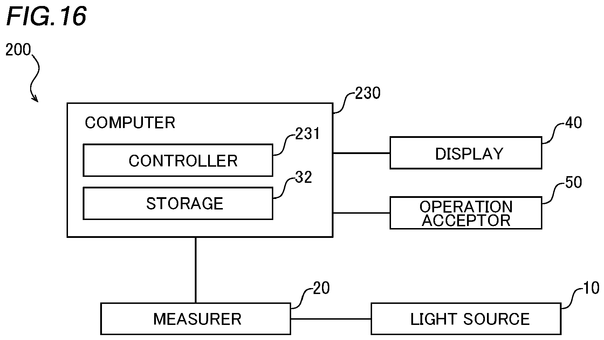

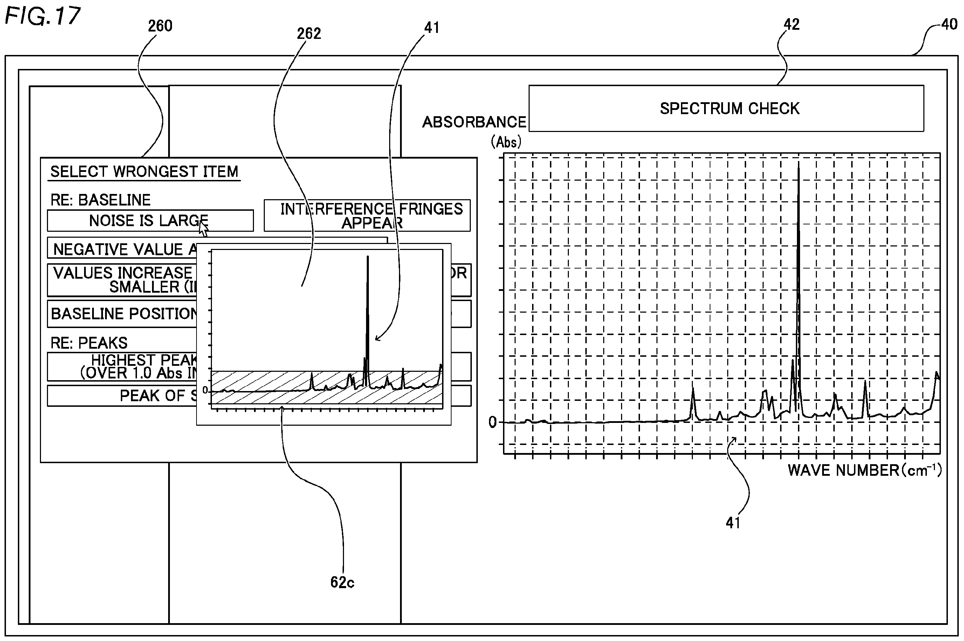

A spectrum analysis system according to a second embodiment is now described with reference to FIGS. 16 and 17. In this second embodiment, the measurement spectrum waveform 41 based on a measurement result is displayed as a reference spectrum waveform 262 dissimilar to the first embodiment in which one of the reference spectrum waveforms 62, which are predetermined sample waveforms previously stored, is is displayed. The same configurations in FIGS. 16 and 17 as those of the first embodiment are denoted by the same reference numerals.

### (Configuration of Spectrum Analysis System of Second Embodiment)

As shown in FIG. 16, the spectrum analysis system 200 according to the second embodiment includes a computer 230. The computer 230 includes a controller 231. Similar to the controller 31 in the first embodiment, the controller 231 includes an arithmetic unit such as CPU, for example, and controls the entire operation of the spectrum analysis system 200.

As shown in FIG. 17, the controller 231 displays spectrum check information 260 on the display 40 after checking the spectrum similar to the controller 31 in the first embodiment. In the second embodiment, the controller 231 is configured to control a function of displaying a measurement spectrum waveform 41 based on the measurement result with the attention area 62c being recognizably displayed as the reference spectrum waveform 262 on the display 40. Similar to the first embodiment, when accepting an input instruction to execute spectrum check processing, the controller 231 displays the plurality of anomaly items 61a to 61g with being selectable on the display 40. Subsequently, if any of the plurality of anomaly items 61a to 61g is selected by mouse-over operation, the reference spectrum waveform 262 corresponding to one selected from the plurality of anomaly items 61a to 61g is displayed on the display 40 similar to the first embodiment. The controller 231 superimposes an attention area 62c corresponding to one selected from the plurality of anomaly items 61a to 61g on the measurement spectrum waveform 41 acquired based on the measurement result.

Specifically, the controller 231 specifies an area of the attention area 62c that corresponds to the selected one of the plurality of anomaly items 61a to 61g based on the measurement spectrum waveform 41. For example, in a case in which the controller 231 specifies the attention area 62c corresponding to the anomaly item 61a indicating that noise is large, an area that is defined by absolute values that fall within a noise threshold range with respect to zero in the vertical axis in the measurement spectrum waveform 41 is specified as the attention area 62c.

The controller 231 also generates a reference spectrum waveform 262 by specifying the attention area 62c based on the measurement spectrum waveform 41 when displaying the reference spectrum waveform 262 corresponding to the anomaly item in the second stage.

The other configuration of the spectrum analysis system 200 according to the second embodiment is similar to the first embodiment.

### Advantages of Second Embodiment

In the second embodiment, the following advantages are obtained.

In the second embodiment, as discussed above, the controller 231 is configured to control a function of displaying a measurement spectrum waveform 41 based on the measurement result with the attention area 62c being recognizably displayed as the reference spectrum waveform 262 (first reference spectrum waveform) on the display 40. According to this configuration, because the attention area 62c, which is the area on which users pay attention, is recognizably displayed in the measurement spectrum waveform 41 actually generated based on the measurement result, users can more intuitively recognize which area in the measurement spectrum waveform 41 they pay attention on to solve the anomaly. Therefore, even users who are inexperienced in analysis of measurement spectral waveforms 41 acquired by measurement results can more easily determine which type of anomaly appears in measurement spectrum waveforms 41.

The other advantages of the second embodiment are similar to the first embodiment.

### Modified Embodiment

Note that the embodiment disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

While the example in which representation and spectrum check of the measurement spectrum waveform 41 in the absorbance indication in the measurement measured by the transmission method are performed has been shown in the aforementioned first and second embodiments, the present invention is not limited to this. In the present invention, spectrum check may be performed for transmittance indication instead of absorbance indication. In this case, a plurality of anomaly items (first anomaly items) corresponding to the transmittance indication are displayed. In cases of analysis conditions of the transmittance indication in the transmission method, for example, first anomaly items relating to a base line part includes "Transmittance is higher than 100%", "Values decrease in wave number range 1,000 cm⁻¹ or smaller", "Baseline position is smaller than 100%", etc, and first anomaly items relating to peak parts includes "Highest peak intensity is saturated (reaches 0%)", "Peak of sample is NOT detected", etc.

Alternatively, representation and spectrum check of the measurement spectrum waveform 41 may be performed in an analysis condition in which the reflection method or ATR method is selected instead of the transmission method. In a case in which the reflection method is selected, for example, a plurality of first anomaly items "Highest peak is too low (0.01 Abs or lower) in absorbance indication", "Peak is distorted", "Peak is inverted", etc. may be displayed with being selectable. In a case in which the ATR method is selected, a plurality of first anomaly items including an anomaly item relating to a base line part "Values increase on small number side", etc. and an anomaly item relating to peak parts "Inverted peak is included", etc. may be displayed with being selectable. In a case in which the reflection method or ATR method is selected as the measurement condition, similar to the transmission method, the reference spectrum waveform (first reference spectrum waveform) corresponding to one of the plurality of first anomaly items, or the reference spectrum waveform (second reference spectrum waveform) corresponding to one of the plurality of second anomaly items is displayed in response to one selected from the items on the display.

While the example in which when any of the plurality of anomaly items 61a to 61g is selected by mouse-over operation, the reference spectrum waveform 62 or 262 (first reference spectrum waveform) corresponding to one selected from the plurality of anomaly items 61a to 61g (first anomaly items) is displayed has been shown in the aforementioned first and second embodiments, the present invention is not limited to this. In the present invention, the first reference spectrum waveform may be displayed adjacent to the plurality of first anomaly items displayed with being selectable. In other words, the plurality of first anomaly items may be displayed with being selectable and arranged adjacent to the first reference spectrum waveform. Also, when one of the plurality of anomaly items is clicked, the first reference spectrum waveform may be displayed.

While the example in which an area of the attention area 62c is displayed in a color, which is recognizable with respect to the anomalous waveform 62a indicating a feature of the anomaly corresponding to one of the anomaly items 61a to 61g (first anomaly items) and the normal waveform 62b indicating that no anomaly appears, in the reference spectrum waveform 62 or 262 (first reference spectrum waveform or second reference spectrum waveform) to recognizably indicate the attention area 62c has been shown in the aforementioned first and second embodiments, the present invention is not limited to this. In the present invention, the area of the attention area may be recognizably displayed by a frame that surrounds the attention area. Alternatively, only the anomalous waveform indicating a feature of the anomaly may be displayed while the attention area may be recognizably displayed. Also, no attention area may be recognizably displayed in at least one of the first reference spectrum waveform and the second reference spectrum waveform.

While the example in which the plurality of anomaly items 61a to 61g (first anomaly items), which are displayed depending on predetermined analysis conditions, are changed has been shown in the aforementioned first and second embodiments, the present invention is not limited to this. In the present invention, the types of the first anomaly items may not be changed depending on the analysis conditions.

While the example in which the plurality of anomaly items 61a to 61e (first anomaly items) that indicate types of anomalies including noise in a baseline part(s), Interference fringes in a baseline part(s), anomalous baseline part position and anomalous baseline part shape, and the plurality of anomaly items 61f and 61g (first anomaly items) that indicate types of anomalies including saturation of a peak part and detection failure of a peak part are displayed with being selectable on the display 40 has been shown in the aforementioned first and second embodiments, the present invention is not limited to this. In the present invention, the first anomaly item(s) that indicates/indicate a type(s) of an anomaly/anomalies including at least one of saturation of a peak part(s), detection failure of a peak part(s), shape distortion of a peak part(s) and peak part inversion, and the first anomaly item(s) that indicates/indicate a type(s) of an anomaly/anomalies including at least one of noise in a baseline part(s), Interference fringes in a baseline part(s), anomalous baseline part position and anomalous baseline part shape may be separately displayed with being selectable on the display.

While the example in which, in a case in which a measurement spectrum waveform 41 based on the measurement result is displayed as the reference spectrum waveform 262 (first reference spectrum waveform), an area that is defined by absolute values that fall within a noise threshold range with respect to zero in the vertical axis in the measurement spectrum waveform 41 is specified as the attention area 62c corresponding to the anomaly item 61a indicating "Noise is large" in a baseline part has been shown in the aforementioned second embodiment, the present invention is not limited to this. In the present invention, in a case in which a measurement spectrum waveform based on the measurement result is displayed as the reference spectrum waveform, the attention area may be specified based on the measurement spectrum waveform. For example, in a case in which the first reference spectrum waveform corresponding to at least one of anomalous baseline part position and anomalous baseline part shape is displayed, a baseline part(s) may be detected in the measurement spectrum waveform, and a position and a shape of the detected baseline part may be detected to specify the attention area corresponding to a type of an anomaly in the baseline part. The attention area corresponding to a type of an anomaly in peak parts may be similarly specified.

While the example in which the spectrum analysis system 100 (200) measures the inspection target 101 by using the measurer 20, which is an infrared microscope has been shown in the aforementioned first and second embodiments, the present invention is not limited to this. In the present invention, the spectrum analysis system may measure the inspection target by using FTIR, Raman spectrometry, or mass spectrometry without using the infrared microscope.

### Modes

The aforementioned exemplary embodiments will be understood as concrete examples of the following modes by those skilled in the art.

### (Mode Item 1)

A spectrum analysis system according to mode item 1 includes a measurer configured to measure an inspection target; a display configured to display a measurement spectrum waveform based on a measurement result measured by the measurer; and a controller configured to control a function of displaying a plurality of first anomaly items that indicate a type(s) of anomaly/anomalies in representation of the measurement spectrum waveform, and are selectable on the display, wherein the controller is configured to control a function of displaying a first reference spectrum waveform for reference to a representation form(s) of an anomaly/anomalies corresponding to one of the first anomaly items on the display for each of the plurality of first anomaly items.

### (Mode Item 2)

In the spectrum analysis system according to mode item 1, an operation acceptor is further provided and configured to accept a selecting operation to select one first anomaly item from the plurality of first anomaly items displayed on the display, and the controller is configured to a function of displaying the first reference spectrum waveform corresponding to the selected first anomaly item on the display in response to the selecting operation accepted by the operation acceptor.

### (Mode Item 3)

In the spectrum analysis system according to mode item 2, the controller is configured to control a function of displaying a plurality of second anomaly items for identifying a type of the anomaly that are selectable on the display and correspond to the one first anomaly item selected from the plurality of first anomaly items, and a function of displaying a second reference spectrum waveform for reference to a representation form(s) of an anomaly/anomalies corresponding to one of the second anomaly items on the display for each of the second anomaly items.

### (Mode Item 4)

In the spectrum analysis system according to any of mode items 1 to 3, the controller is configured to control a function of displaying the first reference spectrum waveform on the display with an attention area(s) corresponding to a type of the anomaly in the measurement spectrum waveform being recognizably displayed for each of the plurality of first anomaly items.

### (Mode Item 5)

In the spectrum analysis system according to mode item 4, the controller is configured to control a function of displaying the measurement spectrum waveform based on the measurement result with the attention area being recognizably displayed as the first reference spectrum waveform on the display.

### (Mode Item 6)

In the spectrum analysis system according to any of mode items 1 to 4, a storage is further provided and configured to store a plurality of first reference spectrum waveforms which are predetermined sample waveforms corresponding to the types of anomalies of the plurality of first anomaly items, wherein the controller is configured to control a function of displaying one of the first reference spectral waveforms, which are stored in the storage, on the display separately from the measurement spectrum waveform for each of the plurality of first anomaly items.

### (Mode Item 7)

In the spectrum analysis system according to any of mode items 1 to 6, the controller is configured to control a function of displaying solution information indicating a solution(s) for the anomaly/anomalies corresponding to the one of the plurality of first anomaly items together with the first reference spectrum waveform corresponding to the one of the first anomaly items on the display.

### (Mode Item 8)

In the spectrum analysis system according to any of mode items 1 to 7, the controller is configured to change a type(s) of the plurality of first anomaly items displayed on the display in accordance with a predetermined analysis condition (s) .

### (Mode Item 9)

In the spectrum analysis system according to any of mode items 1 to 8, the controller is configured to control a function of separately displaying the first anomaly items that indicate a type(s) of the anomaly/anomalies relating to a peak part(s) in representation of the measurement spectrum waveform, and the first anomaly item that indicate a type(s) of the anomaly/anomalies relating to a baseline part(s) in representation of the measurement spectrum waveform with being selectable on the display; and a function of displaying the first reference spectral waveform corresponding to the one of the first anomaly items relating to the peak and baseline parts on the display for each of the plurality of first anomaly items.

### (Mode Item 10)

In the spectrum analysis system according to mode item 9, the controller is configured to control a function of separately displaying the first anomaly item(s) that indicates/indicate a type(s) of an anomaly/anomalies including at least one of saturation of a peak part(s), detection failure of a peak part(s), shape distortion of a peak part(s) and peak part inversion, and the first anomaly item(s) that indicates/indicate a type(s) of an anomaly/anomalies including at least one of noise in a baseline part(s), interference fringes in a baseline part(s), anomalous baseline part position and anomalous baseline part shape with being selectable on the display.

### (Mode Item 11)

In the spectrum analysis system according to any of mode items 1 to 10, the measurer is configured to measure the inspection target by detecting infrared light with which the inspection target is irradiated; and the controller is configured to control a function of displaying one of the first reference spectral waveforms for each of the plurality of first anomaly items which indicate types of anomalies in representation of the measurement spectrum waveform based on the detection of the infrared light.

### (Mode Item 12)

A spectrum analysis method according to mode item 12 includes a step of displaying a measurement spectrum waveform based on a measurement result acquired by measuring an inspection target on a display; a step of displaying a plurality of first anomaly items that indicate a type(s) of anomaly/anomalies in representation of the measurement spectrum waveform with being selectable on the display; and a step of displaying a first reference spectrum waveform for reference to a representation form(s) of an anomaly/anomalies corresponding to one of the first anomaly items in response to selection from the plurality of first anomaly items.

## Claims

1. A spectrum analysis system (100) comprising:
a measurer (20) configured to measure an inspection target (101);
a display (40) configured to display a measurement spectrum waveform (41) based on a measurement result measured by the measurer (20); and
a controller (31) configured to control a function of displaying a plurality of first anomaly items (61a, 61b, 61c, 61d, 61e, 61f, 61g) that indicate a type(s) of anomaly/anomalies in representation of the measurement spectrum waveform (41), and are selectable on the display (40), wherein
the controller (31) is configured to control a function of displaying a first reference spectrum waveform (62) for reference to a representation form(s) of an anomaly/anomalies corresponding to one of the plurality of the first anomaly items (61a, 61b, 61c, 61d, 61e, 61f, 61g) on the display for each of the plurality of first anomaly items (61a, 61b, 61c, 61d, 61e, 61f, 61g).

2. The spectrum analysis system according to claim 1 further comprising an operation acceptor configured to accept a selecting operation to select one first anomaly item (61a, 61b, 61c, 61d, 61e, 61f, 61g) from the plurality of first anomaly items (61a, 61b, 61c, 61d, 61e, 61f, 61g) displayed on the display (40), wherein
the controller (31) is configured to a function of displaying the first reference spectrum waveform (62) corresponding to the selected first anomaly item (61a) on the display (40) in response to the selecting operation accepted by the operation acceptor (50).

3. The spectrum analysis system according to claim 2, wherein
the controller (31) is configured to control
a function of displaying a plurality of second anomaly items (61h, 61i, 61j) for identifying a type of the anomaly that are selectable on the display (40) and correspond to the one first anomaly item (61a, 61b, 61c, 61d, 61e, 61f, 61g) selected from the plurality of first anomaly items (61a, 61b, 61c, 61d, 61e, 61f, 61g), and
a function of displaying a second reference spectrum waveform (62) for reference to a representation form(s) of an anomaly/anomalies corresponding to at one of the second anomaly items (61h, 61i, 61j) on the display (40) for each of the second anomaly items (61h, 61i, 61j).

4. The spectrum analysis system according to claim 1, wherein the controller (31) is configured to control a function of displaying the first reference spectrum waveform (62) on the display (40) with an attention area(s) (62c) corresponding to a type of the anomaly in the measurement spectrum waveform (41) being recognizably displayed for each of the plurality of first anomaly items (61a, 61b, 61c, 61d, 61e, 61f, 61g).

5. The spectrum analysis system according to claim 4, wherein the controller (231) is configured to control a function of displaying the measurement spectrum waveform (41) based on the measurement result with the attention area (62c) being recognizably displayed as the first reference spectrum waveform (262) on the display (40).

6. The spectrum analysis system according to claim 1 further comprising a storage (32) configured to store a plurality of first reference spectrum waveforms (62) which are predetermined sample waveforms corresponding to the types of anomalies of the plurality of first anomaly items (61a, 61b, 61c, 61d, 61e, 61f, 61g), wherein
the controller (31) is configured to control a function of displaying one of the first reference spectral waveforms (62), which are stored in the storage (32), on the display (40) separately from the measurement spectrum waveform (41) for each of the plurality of first anomaly items (61a, 61b, 61c, 61d, 61e, 61f, 61g).

7. The spectrum analysis system according to claim 1, wherein the controller (31) is configured to control a function of displaying solution information (63) indicating a solution(s) for the anomaly/anomalies corresponding to the at least one of the plurality of first anomaly items (61a, 61b, 61c, 61d, 61e, 61f, 61g) together with the first reference spectrum waveform (62) corresponding to the one of the first anomaly items (61a, 61b, 61c, 61d, 61e, 61f, 61g) on the display (40).

8. The spectrum analysis system according to claim 1, wherein the controller (31) is configured to change a type(s) of the plurality of first anomaly items (61a, 61b, 61c, 61d, 61e, 61f, 61g) displayed on the display (40) in accordance with a predetermined analysis condition(s).

9. The spectrum analysis system according to claim 1, wherein
the controller (31) is configured to control
a function of separately displaying the first anomaly items (61f, 61g) that indicate a type(s) of the anomaly/anomalies relating to a peak part(s) in representation of the measurement spectrum waveform (41), and the first anomaly item (61a, 61b, 61c, 61d, 61e) that indicate a type(s) of the anomaly/anomalies relating to a baseline part(s) in representation of the measurement spectrum waveform (41) with being selectable on the display (40); and
a function of displaying the first reference spectral waveform (62) corresponding to the one of the first anomaly items (61a, 61b, 61c, 61d, 61e, 61f, 61g) relating to the peak and baseline parts on the display (40) for each of the plurality of first anomaly items (61a, 61b, 61c, 61d, 61e, 61f, 61g).

10. The spectrum analysis system according to claim 9, wherein the controller (31) is configured to control a function of separately displaying the first anomaly item(s) (61f, 61g) that indicates/indicate a type(s) of an anomaly/anomalies including at least one of saturation of a peak part(s), detection failure of a peak part(s), shape distortion of a peak part(s) and peak part inversion, and the first anomaly item(s) (61a, 61b, 61c, 61d, 61e) that indicates/indicate a type(s) of an anomaly/anomalies including at least one of noise in a baseline part(s), interference fringes in a baseline part(s), anomalous baseline part position and anomalous baseline part shape with being selectable on the display (40).

11. The spectrum analysis system according to claim 1, wherein
the measurer (20) is configured to measure the inspection target (101) by detecting infrared light with which the inspection target (101) is irradiated; and
the controller (31) is configured to control a function of displaying one of the first reference spectral waveforms (62) for each of the plurality of first anomaly items (61a, 61b, 61c, 61d, 61e, 61f, 61g) which indicate types of anomalies in representation of the measurement spectrum waveform (41) based on the detection of the infrared light.

12. A spectrum analysis method comprising:
a step of displaying a measurement spectrum waveform (41) based on a measurement result acquired by measuring an inspection target (101) on a display (40);
a step of displaying a plurality of first anomaly items (61a, 61b, 61c, 61d, 61e, 61f, 61g) that indicate a type(s) of anomaly/anomalies in representation of the measurement spectrum waveform (41) with being selectable on the display (40); and
a step of displaying a first reference spectrum waveform (62) for reference to a representation form(s) of an anomaly/anomalies corresponding to at least one of the first anomaly items (61a, 61b, 61c, 61d, 61e, 61f, 61g) on the display (40) for each of the plurality of first anomaly items (61a, 61b, 61c, 61d, 61e, 61f, 61g).
